## Europäisches Patentamt

(19) **European Patent Office**

**Office européen des brevets**

(11) Publication number: **0 192 394**
**B1**

## EUROPEAN PATENT SPECIFICATION

(45) Date of publication of the patent specification:
**13.09.89**

(51) Int. Cl.⁴: **B 01 D 53/04,** B 01 J 20/18

(21) Application number: **86300903.1**

(22) Date of filing: **11.02.86**

(54) Selective adsorption process.

<table>
<tr><td>

(30) Priority: **13.02.85 GB 8503712**

(43) Date of publication of application:
**27.08.86 Bulletin 86/35**

(45) Publication of the grant of the patent:
**13.09.89 Bulletin 89/37**

(84) Designated Contracting States:
**BE DE FR GB IT NL**

(56) References cited:
**EP-A-0 030 811**
**DE-B-1 280 225**
**GB-A-1 437 600**
**GB-A-2 089 675**
**US-A-3 702 886**
**US-A-3 960 520**
**US-A-4 257 885**
**US-A-4 401 572**
**US-A-4 449 990**

**CHEMICAL ABSTRACTS, vol. 100, no. 20, 1984, page 359, abstract no. 162259b, Columbus, Ohio, US; S. FURUYAMA et al.: "Sorption of argon, oxygen, nitrogen, nitric oxide, and carbon monoxide by hydrogen mordenite, hydrogen ZSM-5 synthetic zeolite, and sodium hydrogen mordenites", & J. PHYS. CHEM. 1984, 88(9), 1741-4**

</td><td>

(73) Proprietor: **The British Petroleum Company p.l.c., Britannic House Moor Lane, London EC2Y 9BU (GB)**

(72) Inventor: **Maunders, Barry Martin, The Britisch Petroleum Comp. p.l.c. Chertsey Road, Sunbury-on- Thames Middlesex TW16 7LN (GB)**

(74) Representative: **Crack, Richard David, BP INTERNATIONAL LIMITED Patents Division Chertsey Road, Sunbury- on- Thames Middlesex TW16 7LN (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1989

## Description

The present invention relates to a process for the separation of nitrogen from a gaseous mixture containing nitrogen and oxygen.

Processes employing zeolitic molecular sieves for separating nitrogen/oxygen mixtures are known from, for example, US Patent No. 3 564 816, British Patent No. 1 437 600 and an article entitled "Molecular Sieves" in Soc. of Chem. Ind. (London), 1968, by D. Domine and L. Hay at pages 204-216. The processes described all utilise zeolites in which the silica to alumina molar ratio is less than 10, such as zeolite 5A, zeolite 13X, mordenite, chabazite and erionite.

It has now been found that an MFI type zeolite gives an improved separation as compared with the above described zeolites. The term 'MFI-type Zeolite' is defined in the Atlas of Zeolite Structure Types by W.M. Meier and D.H. Olson, published by the Structure Commission of the International Zeolite Association, 1978. MFI type zeolites are different not only in structure but also in silica to alumina molar ratio from the zeolites which have been previously described for this separation. An MFI zeolite always has a silica to alumina ratio of at least 10.

According to one aspect the present invention provides a process for the separation of nitrogen from a gaseous mixture containing nitrogen and oxygen which process comprises contacting the gaseous mixture with a bed of solid adsorbent in an adsorption stage to selectively adsorb nitrogen and thereafter recovering a gas enriched in nitrogen from the adsorbent in a desorption stage characterised in that the adsorbent is an MFI-type zeolite.

During the adsorption stage an effluent from the bed enriched in oxygen is produced and this can be recovered, if desired.

According to another aspect of the present invention a process for the separation of nitrogen and oxygen from air comprises contacting the air with a bed of zeolite in an adsorption stage to selectively adsorb the nitrogen and produce an effluent enriched in oxygen characterised in that the zeolite is an MFI type zeolite.

The MFI-type zeolite used in the present invention can be that described and claimed in US Patent No. 3 702 886, although in this patent the zeolite is referred to as ZSM-5. Thus the terms MFI and ZSM-5 are synonomous. Generally, MFI-type zeolites are obtained by hydrothermal crystallisation from an aqueous gel containing a source of silica, a source of alumina and a mineralising agent or inorganic base. In the process of the aforesaid US Patent No. 3 702 886 the aqueous gel also contains a quaternary ammonium compound, generally regarded as an organic template. MFI-zeolites produced according to this method are not preferred for use in the process of the present invention because of problems associated with the removal of the quaternary ammonium compound from the zeolite in which it tends to block the pores and thereby impair the zeolite's adsorption capabilities. This is true also, but to a very much smaller extent, of zeolites prepared using alkanolamines as nitrogenous organic bases, such as for example those described in our European Patents Nos. 2899B and 2900B. The preferred MFI-type zeolites are those crystallised from a gel containing a source of ammonium ions, as described in our European Patent No. 30811B which is incorporated herein by reference, or from a gel containing only a source of alumina, a source of silica and an inorganic base, as described in US Patent No. 4 257 885 or as described in US Patent No. 4 452 907.

As prepared, MFI-type zeolites may contain cations other than those desired in connection with their use as adsorbents, which cations may arise for example from the mineralising agent and/or inorganic base and/or the nitrogen-containing base used in the preparation of the material. The zeolite may also contain residual nitrogen-containing base lodged in the pores and/or deposited on the surface thereof and also molecules of the liquid medium employed in its preparation. Before use as an adsorbent, it is desirable that residual organic base and liquid medium be removed by calcining the zeolite, suitably at a temperature in the range from 300 to 700°C. Preferably the zeolite is in the sodium or lithium ion exchanged form. Other suitable cations are those of Group IIA of the Periodic Table of the Elements as found in Advanced Inorganic Chemistry, Interscience, 2nd Edition by Cotton and Wilkinson. Techniques for cation-exchanging zeolites and separating the cation-exchanged zeolite from the exchange media are now well established in the art.

The process of the invention may suitably be operated as a pressure swing adsorption process in the manner described for example in US Patent No. 3 564 816 in which the desorption is effected by pressure reduction. Alternatively, the process may be operated as a temperature swing adsorption process.

Conveniently the pressure during the adsorption stage is from 1 to 10 bar absolute preferably in the range from 1 to 4 bar absolute.

Conveniently the pressure during the desorption stage is from 0.1 millibar to 1 bar absolute preferably in the range 0.1 to 1 bar absolute.

Preferably the duration of the adsorption stage is from 20 seconds to 15 minutes and the duration of the desorption stage is also from 20 seconds to 15 minutes. The process may suitably be operated at ambient temperature, though lower and higher temperatures may be employed.

Conveniently the temperature in the bed is within the range -50 to -100°C and the process is conveniently operated isothermally without heat being supplied or extracted.

Conveniently a purge stage is interposed between the adsorption and desorption stages in which the pressure is reduced to a level intermediate that of the adsorption and desorption stages.

The effluent from the purge stage can be recycled to the feed to the adsorption stage.

The process of the present invention can be operated to produce an oxygen enriched gas (as effluent from the adsorption stage) of at least 30 % vol content oxygen, preferably at least 45 % vol.

The zeolite may be used with or without a binder and may be mixed, if desired, with other adsorbents.

The gaseous mixture comprising nitrogen and oxygen is preferably air, though other mixtures comprising nitrogen and oxygen in proportions other than those prevailing in air, may be separated by the process of the invention. The oxygen separated may be used in a variety of applications. The recovered nitrogen may be used, for example, in enhanced oil recovery operations. It may also be used for flare purging, process purging and a variety of other applications.

The invention will now be further illustrated by reference to the following Examples.

## Example 1

Sodium MFI prepared using ammonia solution and no organic base as described in US Patent No. 4 452 907 and thereafter converted by cation-exchange to the sodium form in the following manner:- the MFI zeolite was refluxed three times in about 1.5 l of 1M $NaNO_3$ solution for about 3 hours, washed with distilled water and then dried at 85°C after each reflux. The resulting sodium MFI zeolite had a Si : Al atomic ratio of 15.0, an Al : Na atomic ratio of 1.0 and a weight percent Na of 2.1. The zeolite was pressed at 4 tons in a 35 mm diameter die, broken up and sieved to 10 - 22 mesh (B.S.S.). The zeolite was not diluted or mixed with a binder.

The zeolite (about 4 - 5 ml) was outgassed at elevated temperature (400°C) to remove molecular water. After cooling, it was equilibrated with helium. A known volume (64.5 ml) of the oxygen/nitrogen feed gas mixture (room air) was passed over the zeolite in a single pass at room temperature (23°C) and one bar pressure absolute and the product gas, which was enriched in oxygen, collected. From the product and feed gas compositions (determined gas chromatographically) and their volumes, the amount of gas adsorbed, and its composition, was determined.

The selectivity towards nitrogen adsorption is given by the Separation Factor as follows:

$$\text{Separation Factor } (N_2/O_2) = \text{vol.}N_2 \text{ adsorbed/vol.}O_2 \text{ adsorbed} \times \text{vol.}O_2 \text{ fed/vol.}N_2\text{fed.}$$

Details of the experimental conditions and the results are given in Table 1.

## Example 2

The procedure of Example 1 was repeated except that the sodium MFI zeolite was pressed to 7 tons instead of 4 tons and the volume of air passed was 65.5 ml.

## Example 3

The procedure of Example 1 was repeated except that instead of the sodium MFI zeolite there was used a lithium MFI zeolite, obtained by refluxing the sodium MFI zeolite four times in about 250 ml of 0.25 M $LiNO_3 \cdot 3H_2O$ solution for about 2 to 3 hours, washing with distilled water and then drying at 85°C after each reflux. Finally, the sample was pressed to 4 tons in a 35 mm diameter die, broken up and sieved to 10/22 mesh (B.S.S.) grade.

## Comparison Test

The procedure of Example 1 was repeated except that instead of the sodium MFI zeolite there was used calcium A-type zeolite (Molecular Sieve Type 5A supplied by BDH and manufactured by Union Carbide Corporation; Atomic Si/Al = 1.1; Al/(Na + 2Ca) = 1.2; wt.-% Na = 5.1; wt.-% Ca = 4.3) pressed to 4 tons in a 35 mm diameter die, broken up and sieved to 10/22 mesh (B.S.S.) grade.

The volume of air passed with 74.0 ml.

Details of the experimental conditions and the results of Examples 1, 2 and 3 and the Comparative Test are given in Table 1.

**Table 1**

| Example or Comparative Test | Temperature (°C) | Adsorption Capacity/ (ml/g zeolite) | | Adsorption Capacity/ (ml/ml zeolite) | | Separation Factor |
|---|---|---|---|---|---|---|
| | | $N_2$ | $O_2$ | $N_2$ | $O_2$ | |
| Comparative | 23.2 | 8.2 | 0.6 | 5.74 | 0.42 | 4.0 |
| Example 1 | 23.0 | 14.2 | - | - | - | >100 |
| Example 2 | 23.0 | 13.9 | - | 7.0 | - | >100 |
| Example 3 | 22.5 | 16.8 | 0.0 | 7.8 | 0.0 | >100 |

The oxygen content of the effluent from the adsorption stage was in each case 50.5 % and 50.5 % in Examples 1 and 2 respectively, and in the comparison the figure was 36.6 % by volume. The nitrogen contents were 48.4 %, 48.5 % and 62.4 % respectively.

The above results show that, (i) the MFI zeolites according to the present invention have a greater adsorption capacity for nitrogen than does the calcium A type zeolite which is a typical representative of the prior art, and (ii) the separation factor for the MFI zeolite is over 25 better than that for the calcium A type zeolite.

The results also show that the lithium form of the MFI zeolite has a higher adsorption capacity for nitrogen than the sodium form.

**Example 4**

A sodium form MFI zeolite (Atomic Si/Al 15.3) prepared as described in Example 1 was used in repetitive adsorption-desorption cycles. 3.0 ml of zeolite granules, pressed at 4 tons in a 35 mm diameter die then broken up and sieved to 8 to 16 mesh (BSS), were placed in the adsorption tube and outgassed (ca. 0.1 mbar) at elevated temperature (ca. 370°C). After cooling to ambient temperature, dry air was admitted to the zeolite from graduated glass syringes. The adsorption was carried out by passing the air over the zeolite repeatedly until equilibrium was achieved. The adsorption conditions were as follows; duration 2 to 5 minutes, pressure 1 atmosphere absolute starting from the outgassed state of 0.1 millibar absolute.

The zeolite was then desorbed at a pressure of 0.1 millibar at ambient temperature (about 25°C) for 10 minutes and the adsorption stage repeated with dry air. Three cycles were made and the results given in Tables 2 and 3 below.

The dead space volume of the apparatus plus zeolite was determined by helium adsorption. Thus the amount of air adsorbed by the zeolite was determined. Gas chromatographic analysis of product and starting gases enabled the calculation of the adsorbed phase composition. Separation Factors were calculated as before for each cycle.

**Table 2**

| Adsorption Number | Vol. $N_2$ Ads. ml at STP per 3 ml vol. of zeolite | Vol. $O_2$ Ads. ml at STP per 3 ml vol. of zeolite | Separation Factor |
|---|---|---|---|
| 1 | 17.0 | 1.8 | 3.01 |
| 2 | 17.1 | 1.7 | 3.21 |
| 3 | 17.6 | 1.9 | 2.95 |
| Average | 17.2 | 1.8 | 3.06 |

This demonstrates that all the adsorbed phase is readily recoverable.

For comparison the same procedure was used for 3.0 ml of the calcium A type zeolite granules (Molecular Sieve Type 5A supplied by BDH and manufactured by Union Carbide; Atomic Si/Al 1.1), pressed at 4 tons in a 35 mm diameter die, broken up and sieved to 8 to 16 mesh (BSS). The results for three consecutive dry air adsorptions are given in the Table below.

**Table 3**

| Adsorption Number | Vol. $N_2$ Ads. ml at STP per 3 ml vol. of zeolite | Vol. $O_2$ Ads. ml at STP per 3 ml vol. of zeolite | Separation Factor |
|---|---|---|---|
| 1 | 13.2 | 1.6 | 2.44 |
| 2 | 12.6 | 1.3 | 2.93 |
| 3 | 13.4 | 1.5 | 2.72 |
| Average | 13.1 | 1.5 | 2.70 |

The above results show that the MFI zeolite can be used in a process involving repeated cycles of adsorption and desorption.

The results also show that the MFI zeolite has a higher separation factor than the calcium A type zeolite. The difference which is not as marked as that recorded in Table 1 is accounted for by the different process conditions.

## Claims

1. A process for the separation of nitrogen from a gaseous mixture containing nitrogen and oxygen which process comprises contacting the gaseous mixture with a bed of solid adsorbent in an adsorption stage to selectively adsorb the nitrogen and thereafter recovering a gas enriched in nitrogen from the adsorbent in a desorption stage, characterised in that the solid adsorbent is an MFI type zeolite.

2. A process as claimed in claim 1, characterised in that the MFI type zeolite is employed in the sodium, lithium or Group IIA form.

3. A process as claimed in claim 1 or claim 2, characterised in tat the desorption is effected by reducing the pressure to a level below that of the adsorption stage.

4. A process as claimed in claim 3, characterised in that the pressure during the adsorption stage is from 1 to 10 bar absolute and the pressure during the desorption stage is from 0.1 millibar to 1 bar absolute.

5. A process as claimed in any one of the preceding claims, characterised in that in the adsorption stage an effluent enriched in oxygen is produced and said effluent is recovered.

6. A process as claimed in any one of the preceding claims, characterised in that the gaseous mixture is air.

7. A process as claimed in any one of the preceding claims, characterised in that the duration of the adsorption stage is from 20 seconds to 15 minutes and the duration of the desorption stage is from 20 seconds to 15 minutes.

8. A process as claimed in claim 3, characterised in that a purge stage is interposed between the adsorption and desorption stages in which the pressure is reduced to a level intermediate that of the adsorption and desorption stages.

9. A process as claimed in any one of the preceding claims, characterised in that the process comprises repeated cycles of adsorption and desorption and a plurality of beds of adsorbent are provided and the gaseous mixture is continuously passed to at least one of the beds.

10. A process for the separation of nitrogen and oxygen from air which process comprises contacting the air with a bed of zeolite in an adsorption stage and to selectively adsorb the nitrogen and produce an effluent enriched in oxygen, characterised in that the zeolite is an MFI type.

11. A process as claimed in claim 10, characterised in that the effluent contains at least 30 % by volume of oxygen.

## Patentansprüche

1. Verfahren zur Abtrennung von Stickstoff aus einem Gasgemisch, welches Stickstoff und Sauerstoff enthält und das den Kontakt des Gasgemisches mit einem Bett aus festem Adsorbent in einer Adsorptionsstufe, die den Stickstoff selektiv adsorbiert, und danach die Rückgewinnung eines an Stickstoff angereicherten Gases von dem Adsorbent in einer Desorptionsstufe umfaßt, dadurch gekennzeichnet, daß das feste Adsorbent ein Zeolith vom MFI-Typ ist.

2. Verfahren nach Anspruch 1 dadurch gekennzeichnet, daß der Zeolith vom MFI-Typ in der Natrium-, Lithium- oder Gruppe-IIA-Form eingesetzt wird.

3. Verfahren nach Anspruch 1 oder 2, dadurch gekennzeichnet, daß die Desorption durch Verminderung des Druckes auf einen Wert unterhalb dem der Adsorptionsstufe bewirkt wird.

4. Verfahren nach Anspruch 3, dadurch gekennzeichnet, daß der Druck während der Adsorptionsstufe von 1 bis 10 bar (absolut) beträgt und daß der Druck während der Desorptionsstufe 0,1 mbar bis 1 bar (absolut) beträgt.

5. Verfahren nach irgendeinem der vorangehenden Ansprüche, dadurch gekennzeichnet, daß in der Adsorptionsstufe ein an Sauerstoff angereicherter Ausstrom produziert und dieser Ausstrom zurückgewonnen wird.

6. Verfahren nach irgendeinem der vorangehenden Ansprüche, dadurch gekennzeichnet, daß das Gasgemisch Luft ist.

7. Verfahren nach irgendeinem der vorangehenden Ansprüche, dadurch gekennzeichnet, daß die Dauer der Adsorptionsstufe von 20 sec bis 15 min und die Dauer der Desorptionsstufe von 20 sec bis 15 min beträgt.

8. Verfahren nach Anspruch 3, dadurch gekennzeichnet, daß zwischen die Adsorptions- und Desorptionsstufe eine Reinigungsstufe geschaltet ist, in der der Druck auf einen Wert reduziert wird, der zwischen dem der Adsorptions- und dem der Desorptionsstufe liegt.

9. Verfahren nach irgendeinem der vorangehenden Ansprüche, dadurch gekennzeichnet, daß das Verfahren wiederholte Zyklen von Adsorption und Desorption umfaßt und mit einer Vielzahl von Betten von Adsorbent versehen ist und das Gasgemisch kontinuierlich durch mindestens eines dieser Betten geleitet wird.

10. Verfahren zur Trennung von Stickstoff und Sauerstoff von Luft, das den Kontakt der Luft mit einem Zeolith-Bett in einer Adsorptionsstufe, die Stickstoff selektiv adsorbiert und die Produktion eines mit Sauerstoff angereicherten Ausstromes umfaßt, dadurch gekennzeichnet, daß der Zeolith ein MFI-Typ ist.

11. Verfahren nach Anspruch 10, dadurch gekennzeichnet, daß der Ausstrom mindestens 30 Vol.-% Sauerstoff enthält.

## Revendications

1. Procédé pour séparer l'azote d'un mélange gazeux contenant de l'azote et de l'oxygène, ce procédé comprenant la mise en contact du mélange gazeux avec un lit d'adsorbant solide, dans une étape d'adsorption, en vue d'adsorber sélectivement l'azote, puis la récupération d'un gaz enrichi en azote et provenant de l'adsorbant, dans une étape de désorption, procédé caractérisé en ce que l'adsorbant solide est une zéolite de type MFI.

2. Procédé tel que revendiqué à la revendication 1, caractérisé en ce que la zéolite de type MFI est utilisée sous forme sodique, lithique ou d'un cation du groupe IIA.

3. Procédé tel que revendiqué à la revendication 1 ou à la revendication 2, caractérisé en ce qu'on effectue la désorption en réduisant la pression jusqu'à un niveau inférieur à celui de l'étape d'adsorption.

4. Procédé tel que revendiqué à la revendication 3, caractérisé en ce que la pression absolue régnant au cours de l'étape d'adsorption se situe entre 1 et 10 bars et la pression absolue régnant pendant l'étape de désorption se situe entre 0,1 mbar et 1 bar.

5. Procédé tel que revendiqué dans l'une quelconque des revendications précédentes, caractérisé en ce que, dans l'étape d'adsorption, il y a production d'un effluent enrichi en oxygène, et l'on récupère ledit effluent.

6. Procédé tel que revendiqué dans l'une quelconque des revendications précédentes, caractérisé en ce que le mélange gazeux est l'air.

7. Procédé tel que revendiqué dans l'une quelconque des revendications précédentes, caractérisé en ce que la durée de l'étape d'adsorption se situe entre 20 s et 15 min, et la durée de l'étape de désorption se situe entre 20 s et 15 min.

8. Procédé tel que revendiqué à la revendication 3, caractérisé en ce que, entre les étapes d'adsorption et de désorption, il y a interposition d'une étape de purge au cours de laquelle la pression est réduite à un niveau intermédiaire entre celui des étapes d'adsorption et de désorption.

9. Procédé tel que revendiqué dans l'une quelconque des revendications précédentes, caractérisé en ce que le procédé comprend des cycles répétés d'adsorption et de désorption, en ce qu'on fournit plusieurs lits adsorbants et en ce qu'on fait continuellement passer le mélange gazeux vers au moins l'un des lits.

10. Procédé pour séparer l'azote et l'oxygène de l'air, ce procédé comprenant la mise en contact de l'air avec un lit de zéolite dans une étape d'adsorption, et pour adsorber sélectivement l'azote et produire un effluent enrichi en oxygène, procédé caractérisé en ce que la zéolite est une zéolite de type MFI.

11. Procédé tel que revendiqué à la revendication 10, caractérisé en ce que l'effluent contient au moins 30 % en volume d'oxygène.